(19) Europäisches Patentamt
European Patent Office
Office européen des brevets

(11) **EP 4 124 890 A1**

(12) **EUROPEAN PATENT APPLICATION**

(43) Date of publication:
**01.02.2023 Bulletin 2023/05**

(21) Application number: **21188356.6**

(22) Date of filing: **28.07.2021**

(51) International Patent Classification (IPC):
**G01S 17/931** (2020.01) **G05D 1/02** (2020.01)
**G06K 9/00** (2022.01) **G01S 17/89** (2020.01)

(52) Cooperative Patent Classification (CPC):
**G06V 20/56; B60W 30/00; G01S 17/89;
G01S 17/931**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Continental Autonomous Mobility
Germany GmbH
85057 Ingolstadt (DE)**

(72) Inventor: **Mati, Peter
90411 Nürnberg (DE)**

(74) Representative: **Continental Corporation
c/o Continental Automotive GmbH
Intellectual Property
Nordostpark 30
90411 Nürnberg (DE)**

(54) **DENSIFIED LIDAR POINT CLOUD**

(57) The invention relates to a method for generating a densified LiDAR point cloud by a device (1). A plurality of LiDAR point clouds is received, consisting of a reference LiDAR point cloud and remaining LiDAR point clouds, wherein the plurality of LiDAR point clouds is obtained based on measurements by a LiDAR device (5) of a vehicle at subsequent measurement times. A densified LiDAR point cloud is generated by combining, in a common coordinate system, the reference LiDAR point cloud and the remaining LiDAR point clouds, wherein each remaining LiDAR point cloud is transformed by correcting for a movement of the LiDAR device (5), and wherein only those points of the remaining LiDAR point clouds are combined into the densified LiDAR point cloud which are located in a predefined neighborhood around a point of the reference LiDAR point cloud. The densified LiDAR point cloud is further enhanced by including a plurality of further points, selected based on a statistical distribution around the points of the densified LiDAR point cloud. Preferably, the step of correcting for a movement of the LiDAR device (5) between the measurement times is performed using sensor data obtained from an inertial measurement unit, IMU, (7) of the vehicle. The device (1) further comprises an interface (2), a computing device (3), and a storage device (8). By using a neighborhood filtering method, static objects and moving objects can be treated differently.

Fig. 1

EP 4 124 890 A1

**Description**

The invention relates to a computer-implemented method for generating a densified light detection and ranging (LiDAR) point cloud, a computer implemented method for training an artificial neural network, a computer program product, a non-transitory computer-readable storage medium, a device for generating a densified LiDAR point cloud, and a driver assistance system for a vehicle.

LiDAR imaging systems comprise high-energy laser devices which emit laser beams. The laser beam is pulsed and reflected by an optical device to illuminate a scene. Further, an optical detector is provided which detects the laser beam after an interaction with objects in the environment. Emission of the laser pulse triggers a circuit for measuring the time-of-flight of the laser beam. Based on the measured time-of-flight of the laser beam, a respective distance to an object in the surrounding of the LiDAR system can be determined.

The distance information is generated for a plurality of points comprising the target, to obtain a 3-dimensional LiDAR point cloud. Based on the LiDAR point cloud, information on the object, such as the size and the distance of the object can be determined. By further data analysis, the type of the object can be determined. The data can be used, for instance, in driver assistance systems.

US 2018/341022 A1 relates to a LiDAR-based mapping method. First and second initial data frames are acquired which comprise LiDAR point cloud data scanned by a LiDAR and navigation data collected by an inertial measurement unit (IMU). Point, line and surface features are extracted from the data frames according to a preset algorithm and the data frames are registered based on the extracted features. Then, a local coordinate system is transformed into a global coordinate system and a map is updated.

EP 2 272 045 B1 relates to registration of LiDAR point cloud data. It relates to situations where targets are partially obscured by other objects which may be somewhat porous. Sensors can detect fragments of the target which are visible through the porous areas of the occluding material. By collecting data from several different sensor poses, aggregation of data can be obtained.

Geiger et al., "Are we ready for Autonomous Driving? The KITTI Vision Benchmark Suite", Conference on Computer Vision and Pattern Recognition (CVPR), 2012, relates to providing benchmarks for the tasks of stereo, optical flow, visual odometry / Simultaneous localization and mapping (SLAM) and 3D object detection based on autonomous driving platforms.

Geiger et al. "Vision meets Robotics: The KITTI Dataset", International Journal of Robotics Research (IJRR), 2013, provides a data set for use in mobile robotics and autonomous driving research.

LiDAR data can further be analyzed by machine learning methods, such as artificial neural networks.

However, LiDAR sensors installed onto moving vehicles do not have the right amount of points registered for deep learning purposes. Therefore, an enhancement of the number of points is needed for a good quality ground truth (GT). Indeed, as shown in Uhrig et al., "Sparsity Invariant CNNs", arXiv:1708.06500, traditional convolutional networks perform relatively poorly when applied to sparse data even when the location of missing data is provided to the network. A sparse convolutional layer is proposed which explicitly considers the location of missing data. Using the proposed setup, a dataset from the KITTI benchmark is derived, comprising 93k depth-annotated RGB images.

It is possible to stack subsequent LiDAR point clouds onto each other by using rigid body transformations (rotations and translations) defined by an inertial measurement unit (IMU) sensor, wherein the IMU may also carry out GPS measurements. However, such a point number densification procedure is problematic because the moving objects are blurred due to the registration of their LiDAR point cloud in different time instances.

Another source of problem results even for static objects. As the points are coming from different time instances and are pasted onto a middle frame, some objects might appear transparent. For example, the vehicle can move behind the given objects and the LiDAR registers covered points. Therefore, the densification onto the middle frame can even make the static objects transparent. To overcome this problem, a stereo camera setup can be installed onto the vehicle. A software based stereo matching depth estimation can be performed. The LiDAR measured depth can be compared with the stereo matching estimated depth. All matching points are kept and the remaining points are ignored.

The stereo matching based filtering of the blurred dynamic and/or transparent objects has a high cost due to the additional stereo camera setup. Moreover, the stereo camera setup has to be installed and calibrated properly which is a possible source of error. Further, stereo matching is inaccurate as compared to LiDAR measurements. Inherently, the stereo matching depth is also rather patchy. Also, it is difficult to fine-tune the parameters of the algorithm. Moreover, it may happen that during filtering, usefully registered LiDAR point cloud points are thrown away.

In view of the above, it is therefore an object of the present invention to provide an improved densified LiDAR point cloud, overcoming the above mentioned problems.

The invention provides a computer-implemented method for generating a densified LiDAR point cloud, a computer implemented method for training an artificial neural network, a computer program product, a non-transitory computer-readable storage medium, a device for generating a densified LiDAR point cloud, and a driver assistance system for a vehicle, as recited in the independent claims. Various preferred features of the invention are recited in the dependent claims.

According to the first aspect, the invention therefore provides a computer-implemented method for generating a densified LiDAR point cloud. A plurality of LiDAR point clouds is received, consisting of a reference LiDAR point cloud and remaining LiDAR point clouds, wherein the plurality of LiDAR point clouds is obtained based on measurements by a LiDAR device of a vehicle at subsequent measurement times. A densified LiDAR point cloud is generated by combining the reference LiDAR point cloud and the remaining LiDAR point clouds, wherein each remaining LiDAR point cloud is transformed by correcting for a movement of the LiDAR device in the time span between the measurement time of the remaining LiDAR point cloud and the measurement time of the reference LiDAR point cloud, and wherein only those points of the remaining LiDAR point clouds are combined into the densified LiDAR point cloud which are located in a predefined neighborhood around a point of the reference LiDAR point cloud. The densified LiDAR point cloud is further enhanced by including a plurality of further points, selected based on a statistical distribution around the points of the densified LiDAR point cloud.

According to the second aspect, the invention provides a computer-implemented method for training an artificial neural network. Output training data is provided by generating a plurality of densified LiDAR point clouds according to the method of any of the previous claims. Input training data is provided, given by the reference LiDAR point clouds corresponding to the plurality of densified LiDAR point clouds. The artificial neural network is trained using the input training data as input and the output training data as output.

According to a third aspect, the invention provides a computer program product comprising executable program code configured to, when executed by a computing device, perform the method according to the first aspect or to perform the method according to the second aspect.

According to a fourth aspect, the invention provides a non-transitory, computer-readable storage medium comprising executable program code configured to, when executed by a computing device, perform the method according to the first aspect or to perform the method according to the second aspect.

According to a fifth aspect, the invention provides a device for generating a densified LiDAR point cloud, comprising an interface, configured to receive a plurality of LiDAR point clouds, consisting of a reference LiDAR point cloud and remaining LiDAR point clouds, wherein the plurality of LiDAR point clouds is obtained based on measurements by a LiDAR device of a vehicle at subsequent measurement times; and further comprising a computing device, configured to generate a densified LiDAR point cloud by combining the reference LiDAR point cloud and the remaining LiDAR point clouds, wherein the computing device is adapted to transform each remaining LiDAR point cloud by correcting for a movement of the LiDAR device between the measurement time of the remaining LiDAR point cloud and the measurement time of the reference LiDAR point cloud, and wherein the computing device is further configured to combine only those points of the remaining LiDAR point clouds into the densified LiDAR point cloud which are located in a predefined neighborhood around a point of the reference LiDAR point cloud. The computing device is further configured to further enhance the densified LiDAR point cloud by including a plurality of further points, selected based on a statistical distribution around the points of the densified LiDAR point cloud.

According to a sixth aspect, the invention provides a driver assistance system for a vehicle, comprising a LiDAR device, configured to generate LiDAR measurement data, a device for generating a densified LiDAR point cloud according to the fifth aspect, based on the LiDAR measurement data generated by the LiDAR device; and a control unit, configured to control at least one function of the vehicle based on the generated densified LiDAR point cloud.

The invention relates to the generation of a densified LiDAR point cloud by sticking together (merging) subsequent LiDAR point clouds. All LiDAR point clouds are combined in a common coordinate system. A possible movement of the LiDAR device between different measurement times is corrected for. Further, points that are not included in neighborhoods of the points of the reference LiDAR point cloud are excluded or not included into the densified LiDAR point cloud.

By using such a neighborhood filtering method, static objects and moving objects can be treated differently. For static objects, basically all corresponding points of the respective LiDAR point clouds are included. In contrast, for moving objects, points of the LiDAR point clouds at measurement times farther into the past and future of the measurement time of the reference LiDAR point cloud may happen to be located outside the neighborhoods of the points of the reference point cloud. Accordingly, these points will be omitted and are not included into the densified LiDAR point cloud. The points in the densified LiDAR point cloud (i.e. objects in a depth map) are no longer blurred nor transparent.

The invention does not require a stereo camera setup combined and has therefore a lower cost and is easier to install. Further, no calibration of the cameras is needed. A lot of useful points from the LiDAR point clouds are kept. The depth values in the densified LiDAR point cloud (depthmap) are very accurate. As no camera must be involved, the neighborhood filtering can be performed for the full LiDAR point cloud (e.g., for 360 degrees) and it is not restricted to the windscreen area.

According to a further embodiment of the method for generating a densified LiDAR point cloud, the number of points of the densified LiDAR point clouds is higher than the number of points of the reference LiDAR point cloud by at least a factor of 5, preferably at least a factor of 10. The factor depends on the number of LiDAR point clouds used in the method and also on the number of further points that are additionally added according to the method.

According to a further embodiment of the method for generating a densified LiDAR point cloud, a spatial extension of the predefined neighborhood around a point of the reference LiDAR point cloud for determining whether a point of a remaining LiDAR point cloud is to be combined into the densified LiDAR point cloud depends on a difference between the measurement time of said remaining LiDAR point cloud and the measurement time of the reference LiDAR point cloud. For example, the neighborhood becomes smaller as the temporal distance between the respective remaining LiDAR point cloud and the reference LiDAR point cloud increases.

According to a further embodiment of the method for generating a densified LiDAR point cloud, the spatial extension depends linearly on the difference between the measurement time of said remaining LiDAR point cloud and the measurement time of the reference LiDAR point cloud. For example, a radius c of the neighborhood around points of the reference LiDAR point cloud may be given by the following formula:

$$c = 17 - 3 \cdot d,$$

measured in centimeters, where d denotes the temporal distance with respect to the frame of the reference LiDAR point cloud in terms of time stamps. Thus, for instance, for points in the remaining LiDAR point cloud with d = 3 in temporal distance from the frame of the reference LiDAR point cloud, the points will have a neighborhood radius c = 8 cm. That is, if there is a point in the remaining LiDAR point cloud that is in an 8 cm neighborhood of any point of the reference LiDAR point cloud, said point is kept and added to the densified LiDAR point cloud. Generally, the neighborhood can be set manually and can depend on the dataset, i.e. the plurality of LiDAR point clouds.

According to a further embodiment of the method for generating a densified LiDAR point cloud, a spatial extension of the predefined neighborhood around a point of the reference LiDAR point cloud depends on a depth of said point of the reference LiDAR point cloud. Herein, the depth of a point relates to a distance to the LiDAR device. The error of closer points is penalized more strictly than the farther points.

According to a further embodiment of the method for generating a densified LiDAR point cloud, the spatial extension depends exponentially on the depth of said point of the reference LiDAR point cloud. For example, the spatial dependence of the radius of the neighborhood can be given by the following function:

$$\exp(f(\text{depth})),$$

where f is a function depending on the depth of the given point. Its specific form can be determined based on the respective data set, e.g. f = depth/10 -1.

According to a further embodiment of the method for generating a densified LiDAR point cloud, the plurality of further points for enhancing the densified LiDAR point cloud is selected based on a Gaussian distribution around the points of the densified LiDAR point cloud. For example, additional random points can be added to the densified LiDAR point clouds in a small neighborhood, e.g., drawn from a spherically symmetric Gaussian distribution with a radius of for example 1 to 2 cm.

According to a further embodiment of the method for generating a densified LiDAR point cloud, the plurality of further points for enhancing the densified LiDAR point cloud is selected based on a uniform distribution around the points of the densified LiDAR point cloud. The invention, however, is not restricted to any particular statistical distribution.

According to a further embodiment of the method for generating a densified LiDAR point cloud, the plurality of LiDAR point clouds comprises 2N+1 LiDAR point clouds, wherein the measurement times of N of the LiDAR point clouds are before the measurement time of the reference LiDAR point cloud and the measurement times of N of the LiDAR point clouds are after the measurement time of the reference LiDAR point cloud. In other words, the reference LiDAR point cloud is a central LiDAR point cloud with regard to the measurement times.

According to a further embodiment of the method for generating a densified LiDAR point cloud, the step of correcting for a movement of the LiDAR device between the measurement time of the remaining LiDAR point cloud and the measurement time of the reference LiDAR point cloud is performed using sensor data obtained from an inertial measurement unit, IMU, of the vehicle. Based on the sensor data from the IMU, the movement of the vehicle and therefore the movement of the LiDAR device can be computed. The transformation (translation and rotation) on the remaining LiDAR point clouds is determined based on this computed movement.

According to a further embodiment of the method for generating a densified LiDAR point cloud, the step of correcting for a movement of the LiDAR device between the measurement time of the remaining LiDAR point cloud and the measurement time of the reference LiDAR point cloud is performed using an iterative closest point algorithm. The iterative closest point algorithm is used to map the LiDAR point clouds on each other.

According to a further embodiment, the driver assistance system further comprises an inertial measurement unit, IMU, configured to generate the data; wherein the device for generating the densified LiDAR point cloud is further configured to perform the step of correcting for a movement of the LiDAR device between the measurement time of the remaining LiDAR point cloud and the measurement time of the reference LiDAR point cloud using the sensor data obtained from the IMU.

For a more complete understanding of the invention and the advantages thereof, exemplary embodiments of the invention are explained in more detail in the following description with reference to the accompanying drawing figures, in which like reference characters designate like parts and in which:

Fig. 1    shows a schematic block diagram of a device for generating a densified LiDAR point cloud according to an embodiment of the invention;

Fig. 2    shows a schematic block diagram of a driver assistance system for a vehicle according to an embodiment of the invention;

Fig. 3    shows a flow diagram of a computer-implemented method for generating a densified LiDAR point cloud according to an embodiment of the invention;

Fig. 4    shows a flow diagram of a computer implemented method for training an artificial neural network according to an embodiment of the invention;

Fig. 5    shows a schematic block diagram of a computer program product according to an embodiment of the invention; and

Fig. 6    shows a schematic block datagram of a nontransitory computer-readable storage medium according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as is accorded to such terms and expressions with respect to their corresponding respective areas of inquiry and study, except where specific meanings have otherwise been set forth herein.

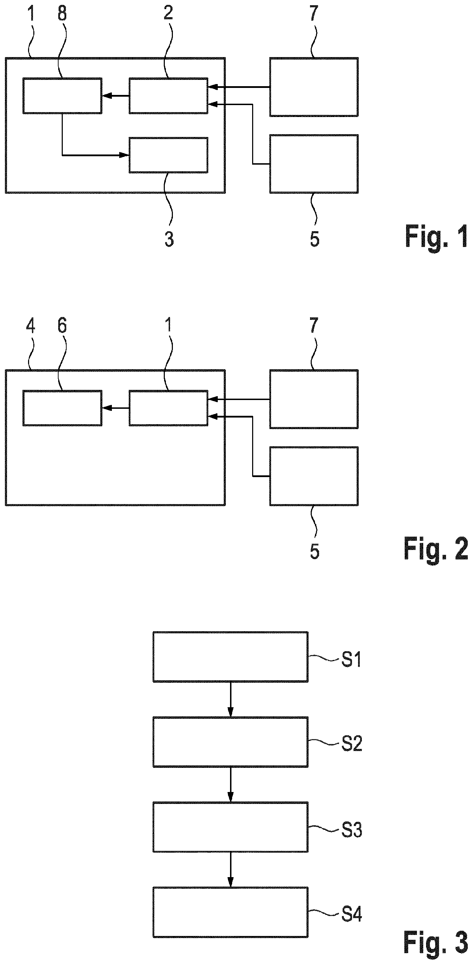

Fig. 1 shows a schematic block diagram of a device 1 for generating a densified LiDAR point cloud. The device 1 comprises an interface 2, e.g. a wireless or wired connection, for receiving a plurality of LiDAR point clouds. The LiDAR point clouds are generated by a LiDAR device 5 of a vehicle at subsequent measurement times. The LiDAR point clouds are stored in a storage device 8 of the device 1.

A computing device 3 (e.g. a microprocessor, integrated circuit or the like) retrieves the stored LiDAR point clouds from the storage device 8 and divides the LiDAR point clouds into a reference LiDAR point cloud and remaining LiDAR point clouds. Herein, the number of remaining LiDAR point clouds can be predefined number, e.g., an even number 2, 4, 8, or 10. The reference LiDAR point cloud can be a center LiDAR point cloud of an uneven number of LiDAR point clouds with respect to a temporal ordering.

The computing device 3 generates a densified LiDAR point cloud by combining the reference LiDAR point cloud and the remaining LiDAR point clouds.

Before combining the LiDAR point clouds, the computing device 3 transforms the remaining LiDAR point clouds by correcting for a movement of the LiDAR device 5 between the measurement time of the remaining LiDAR point cloud and the measurement time of the reference LiDAR point cloud. The correction can be based on data retrieved from an inertial measurement unit 7 of the vehicle or can be based on an iterative closest point algorithm.

Further, the computing device 3 carries out a neighborhood filtering method. According to this neighborhood filtering method, only those points of the remaining LiDAR point clouds are combined into the densified LiDAR point cloud which are located in any predefined neighborhood which are associated with each of the points of the reference LiDAR point cloud. The neighborhood can be a ball or cube with the point being in the center.

The dimensions (e.g. the radius of the ball) of the neighborhood can depend (for example linearly) on the temporal distance between the point in the remaining LiDAR point cloud and said point in the reference LiDAR point cloud.

The dimensions can additionally or alternatively also depend (for example exponentially) on the depth of the point of the reference LiDAR point cloud.

The generation of the densified LiDAR point cloud can be performed offline. However, the generation of the densified LiDAR point cloud can also be performed online, that is, during operation of the vehicle.

The computing device 3 is further configured to further enhance the densified LiDAR point cloud by including a plurality of further points, selected based on a statistical distribution around the points of the densified LiDAR point cloud. For example, the statistical distribution can be a Gaussian or uniform distribution.

Fig. 2 shows a schematic block diagram of a driver assistance system 4 for a vehicle. The driver assistance system 4 comprises a LiDAR device 5 which generates measurement data.

The driver assistance system 4 also comprises a device 1 for generating a densified LiDAR point cloud as shown in figure 1 and described above. The device 1 generates a densified LiDAR point cloud based on the measurement data generated by the LiDAR device 5. The device 1 further comprises a control unit 6 which controls at least one function of the vehicle based on the generated densified LiDAR point cloud. For example, the control unit 6 may provide at least one of parking assistance functions, lane keeping functions, emergency braking functions, overtaking assist functions or the like. The control unit 6 may steer the vehicle or accelerate or decelerate the vehicle.

Fig. 3 shows a flow diagram of a computer-implemented method for generating a densified LiDAR point cloud. The method may be performed with the device 1 shown in figure 1.

In a first method step S1, a LiDAR device 5 of a vehicle generates a plurality of LiDAR point clouds at respective measurement times.

In a second method step S2, a device 1 (such as the device 1 illustrated in figure 1) receives the plurality of LiDAR point clouds, which are divided into of a reference LiDAR point cloud and remaining LiDAR point clouds.

In a third method step S3, a densified LiDAR point cloud is generated by combining the reference LiDAR point cloud and the remaining LiDAR point clouds, wherein each remaining LiDAR point cloud is transformed by correcting for a movement of the LiDAR device 5 between the measurement time of the remaining LiDAR point cloud and the measurement time of the reference LiDAR point cloud, and wherein only those points of the remaining LiDAR point clouds are combined into the densified LiDAR point cloud which are located in a predefined neighborhood around a point of the reference LiDAR point cloud. The neighborhood can depend on a spatial or temporal location of the point of the reference LiDAR point cloud.

For example, the dimensions (e.g. the radius of the ball) of the neighborhood can depend (for example linearly) on the temporal distance between the point in the remaining LiDAR point cloud and said point in the reference LiDAR point cloud.

Further, the dimensions may additionally or alternatively also depend (for example exponentially) on the depth of the point of the reference LiDAR point cloud.

In a fourth method step S4, the densified LiDAR point cloud is further enhanced by including a plurality of further random points, selected based on a statistical distribution (for example a uniform or Gaussian distribution) around the points of the densified LiDAR point cloud.

The method for generating the densified LiDAR point cloud using the neighborhood filtering algorithm can be part of a data generating pipeline that generates the input of a deep neural network, as described in the following.

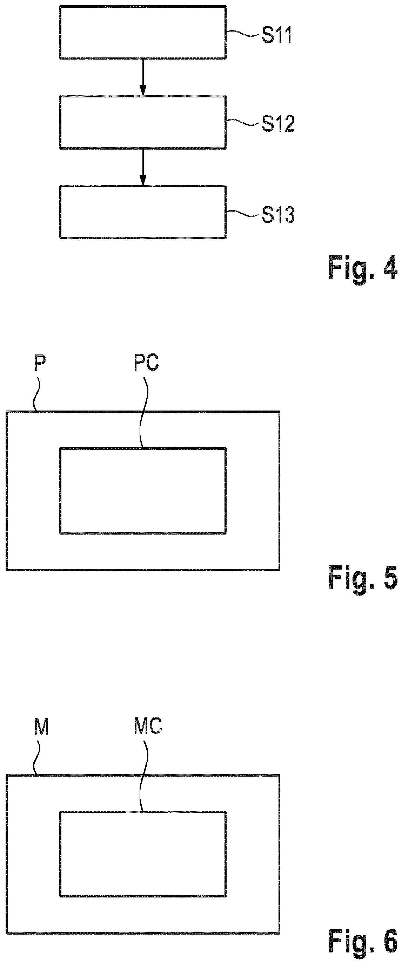

Fig. 4 shows a flow diagram of a computer implemented method for training an artificial neural network.

In a first step S11, output training data is provided by generating a plurality of densified LiDAR point clouds according to the method described in figure 3. Herein, the output training data refers to a set of ground truths used for training the artificial neural network.

In a second step S12, input training data is provided, given by the reference LiDAR point clouds corresponding to the plurality of densified LiDAR point clouds.

In a third step S13, the artificial neural network is trained using the input training data as input and the output training data as output.

The training method of the artificial neural network is carried out in a supervised manner, that is, for each training input data (reference LiDAR point cloud) the corresponding densified LiDAR point cloud is given as ground truth. The artificial neural network is trained to generate a densified LiDAR point cloud (i.e., enhanced depth map) based on sparse original LiDAR point clouds as input.

The artificial neural network may be any known network, e.g., a convolutional neural network, CNN.

Fig. 5 schematically illustrates a block diagram illustrating a computer program product P comprising executable program code PC. The executable program code PC is configured to perform, when executed (e.g., by a computing device), the method for generating the densified LiDAR point cloud or the method for training the artificial neural network, as described above.

Fig. 6 shows a schematic block datagram of a non-transitory computer-readable storage medium M comprising executable program code MC configured to, when executed (e.g., by a computing device), perform the method for generating the densified LiDAR point cloud or the method for training the artificial neural network, as described above.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

List of Reference Signs

| | |
|---|---|
| 1 | device for generating a densified LiDAR point cloud |
| 2 | interface |
| 3 | computing device |
| 4 | driver assistance system |
| 5 | LiDAR device |
| 6 | control unit |
| 7 | inertial measurement unit |
| 8 | storage device |
| S1-S4 | method steps |
| S11-S13 | method steps |
| M | storage medium |
| MC | program code |
| P | computer program product |
| PC | program code |

**Claims**

1. A computer-implemented method for generating a densified LiDAR point cloud, the method comprising the following steps:

receiving (S2) a plurality of LiDAR point clouds, consisting of a reference LiDAR point cloud and remaining LiDAR point clouds, wherein the plurality of LiDAR point clouds is obtained based on measurements by a LiDAR device (5) of a vehicle at subsequent measurement times; generating (S3) a densified LiDAR point cloud by combining the reference LiDAR point cloud and the remaining LiDAR point clouds, wherein each remaining LiDAR point cloud is transformed by correcting for a movement of the LiDAR device (5) between the measurement time of the remaining LiDAR point cloud and the measurement time of the reference LiDAR point cloud, and wherein only those points of the remaining LiDAR point clouds are combined into the densified LiDAR point cloud which are located in a predefined neighborhood around a point of the reference LiDAR point cloud; and further enhancing (S4) the densified LiDAR point cloud by including a plurality of further points, selected based on a statistical distribution around the points of the densified LiDAR point cloud.

2. The method according to claim 1, wherein a spatial extension of the predefined neighborhood around a point of the reference LiDAR point cloud for determining whether a point of a remaining LiDAR point cloud is to be combined into the densified LiDAR point cloud depends on a difference between the measurement time of said remaining LiDAR point cloud and the measurement time of the reference LiDAR point cloud.

3. The method according to claim 2, wherein the spatial extension depends linearly on the difference between the measurement time of said remaining LiDAR point cloud and the measurement time of the reference LiDAR point cloud.

4. The method according to any of the preceding claims, wherein a spatial extension of the predefined neighborhood around a point of the reference LiDAR point cloud depends on a depth of said point of the reference LiDAR point cloud.

5. The method according to claim 4, wherein the spatial extension depends exponentially on the depth of said point of the reference LiDAR point cloud.

6. The method according to any of the preceding claims, wherein the plurality of further points for enhancing the densified LiDAR point cloud is selected based on a Gaussian distribution around the points of the densified LiDAR point cloud.

7. The method according to any of the preceding claims, wherein the plurality of LiDAR point clouds comprises 2N+1 LiDAR point clouds, wherein the measurement times of N of the LiDAR point clouds are before the measurement time of the reference LiDAR point cloud and the measurement times of N of the LiDAR point clouds are after the measurement time of the reference LiDAR point cloud.

8. The method according to any of the preceding claims, wherein the step of correcting for a movement of the LiDAR device (5) between the measurement time of the remaining LiDAR point cloud and the measurement time of the reference LiDAR point cloud is performed using sensor data obtained from an inertial measurement unit (7), IMU, of the vehicle.

9. The method according to any of the preceding claims, wherein the step of correcting for a movement of the LiDAR device (5) between the measurement time of the remaining LiDAR point cloud and the measurement time of the reference LiDAR point cloud is performed using an iterative closest point algorithm.

10. A computer-implemented method for training an artificial neural network, comprising the steps:

    providing (S11) output training data by generating a plurality of densified LiDAR point clouds according to the method of any of the previous claims;
    providing (S12) input training data given by the reference LiDAR point clouds corresponding to the plurality of densified LiDAR point clouds; and
    training (S13) the artificial neural network using the input training data as input and the output training data as output.

11. A computer program product (P) comprising executable program code (PC) configured to, when executed by a computing device (3), perform the method according to any of claims 1 to 10.

12. A non-transitory, computer-readable storage medium (M) comprising executable program code (MC) configured to, when executed by a computing device (3), perform the method according to any of claims 1 to 10.

13. A device (1) for generating a densified LiDAR point cloud, comprising:

    an interface (2), configured to receive a plurality of LiDAR point clouds, consisting of a reference LiDAR point cloud and remaining LiDAR point clouds, wherein the plurality of LiDAR point clouds is obtained based on measurements by a LiDAR device (5) of a vehicle at subsequent measurement times; and
    a computing device (3), configured to generate a densified LiDAR point cloud by combining the reference LiDAR point cloud and the remaining LiDAR point clouds, wherein the computing device (3) is adapted to transform each remaining LiDAR point cloud by correcting for a movement of the LiDAR device (5) between the measurement time of the remaining LiDAR point cloud and the measurement time of the reference LiDAR point cloud, and wherein the computing device (3) is further configured to combine only those points of the remaining LiDAR point clouds into the densified LiDAR point cloud which are located in a predefined neighborhood around a point of the reference LiDAR point cloud;
wherein the computing device (3) is further configured to further enhance the densified LiDAR point cloud by including a plurality of further points, selected based on a statistical distribution around the points of the densified LiDAR point cloud.

14. A driver assistance system (4) for a vehicle, comprising:

    a LiDAR device (5), configured to generate LiDAR measurement data,
    a device (1) for generating a densified LiDAR point cloud according to claim 13, based on the LiDAR measurement data generated by the LiDAR device (5); and
    a control unit (6), configured to control at least one function of the vehicle based on the generated densified LiDAR point cloud.

15. The driver assistance system (4) according to claim 14, further comprising an inertial measurement unit (7), IMU, configured to generate the data;
wherein the device (1) for generating the densified LiDAR point cloud is further configured to perform the step of correcting for a movement of the LiDAR device (5) between the measurement time of the remaining LiDAR point cloud and the measurement time of the reference LiDAR point cloud using the sensor data obtained from the IMU (7).

Fig. 1

Fig. 2

Fig. 3

S11

S12

S13

**Fig. 4**

P        PC

**Fig. 5**

M        MC

**Fig. 6**

Europäisches
Patentamt
European
Patent Office
Office européen
des brevets

# EUROPEAN SEARCH REPORT

Application Number

EP 21 18 8356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/188841 A1 (POLLOCK RICHARD JAMES [CA]) 25 July 2013 (2013-07-25) * paragraphs [0004] - [0016], [0029] - [0167] * ----- | 1-15 | INV. G01S17/931 G05D1/02 G06K9/00 G01S17/89 |
| A,D | EP 2 272 045 B1 (HARRIS CORP [US]) 13 July 2011 (2011-07-13) * paragraphs [0006] - [0069] * ----- | 1-15 | |

TECHNICAL FIELDS
SEARCHED      (IPC)

G01S
G06K
G05D

The present search report has been drawn up for all claims

| Place of search | Date of completion of the search | Examiner |
|---|---|---|
| Munich | 2 December 2021 | Köppl, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 18 8356

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2021

| Patent document cited in search report | | Publication date | Patent family member(s) | | Publication date |
|---|---|---|---|---|---|
| US 2013188841 | A1 | 25-07-2013 | CA | 2861555 A1 | 25-07-2013 |
| | | | US | 2013188841 A1 | 25-07-2013 |
| | | | US | 2014232718 A1 | 21-08-2014 |
| | | | US | 2015254901 A1 | 10-09-2015 |
| | | | WO | 2013106920 A1 | 25-07-2013 |
| EP 2272045 | B1 | 13-07-2011 | AT | 516561 T | 15-07-2011 |
| | | | CA | 2716880 A1 | 17-09-2009 |
| | | | EP | 2272045 A1 | 12-01-2011 |
| | | | JP | 4926281 B2 | 09-05-2012 |
| | | | JP | 2011513881 A | 28-04-2011 |
| | | | TW | 200945245 A | 01-11-2009 |
| | | | US | 2009232388 A1 | 17-09-2009 |
| | | | WO | 2009114254 A1 | 17-09-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018341022 A1

- EP 2272045 B1

**Non-patent literature cited in the description**

- **GEIGER et al.** Are we ready for Autonomous Driving? The KITTI Vision Benchmark Suite. *Conference on Computer Vision and Pattern Recognition (CVPR),* 2012

- **GEIGER et al.** Vision meets Robotics: The KITTI Dataset. *International Journal of Robotics Research (IJRR),* 2013
- **UHRIG et al.** Sparsity Invariant CNNs. *arXiv:1708.06500*